# EUROPÄISCHE PATENTANMELDUNG

(11) **EP 2 329 912 A1**
(43) Veröffentlichungstag der Anmeldung: **08.06.2011**
(21) Anmeldenummer: 09014860.2
(22) Anmeldetag: 01.12.2009
(51) Int. Cl.: B23P 19/06, B25B 21/00

(54) **Mutternschraubgerät**

(71) Anmelder: Stöger, Lorenz, 82538 Geretsried (DE)
(72) Erfinder: Stöger, Lorenz, 82538 Geretsried (DE)
(74) Vertreter: Flosdorff, Jürgen

(57) **Zusammenfassung**

Das Mutternschraubgerät zum Aufschrauben einer Mutter (12) auf einen Niet (13), der an dem dem Nietkopf (15) gegenüberliegenden Ende eine Sackbohrung (16) aufweist, die eine querschnittlich nicht-runde Kontur hat, mit wenigstens einem Antrieb (1), der über ein Getriebe antriebsmäßig mit einem Eindrehwerkzeug (23) verbunden ist, das eine Aufnahmeöffnung zum Einstecken der Mutter hat, ist dadurch gekennzeichnet, dass das Mutternschraubgerät eine Verdrehsicherung aufweist mit einer Kammer (18), in der ein Verdrehsicherungselement (Bit) (7) verschiebliche angeordnet ist, das einen Kopfabschnitt (8), der den Querschnitt der Kammer (18) im wesentlichen ausfüllt, einen Schaftabschnitt (10) und einen anschließenden Endabschnitt (11) mit einer mit der Sackbohrung (16) übereinstimmenden Kontur aufweist, wobei die Kammer (18) dem Eindrehwerkzeug (23) benachbart angeordnet ist und eine mittige Austrittsöffnung für den Schaft (10) mit dem Endabschnitt des Verdrehsicherungselementes und am Rand der Austrittsöffnung eine umlaufende Schulter (20) als Anschlag für den Kopfabschnitt (8) des Verdrehsicherungselementes (Bit) (7) aufweist.

## Beschreibung

Die Erfindung betrifft ein Mutternschraubgerät zum Aufschrauben einer Mutter auf einen Niet, der an dem dem Nietkopf gegenüber liegenden Ende eine Sackbohrung aufweist, die eine querschnittlich nicht-runde Kontur hat, mit wenigstens einem Antrieb, der über ein Getriebe antriebsmäßig mit einem Eindrehwerkzeug verbunden ist, das eine Aufnahmeöffnung zum Einstecken der Mutter hat.

Der vorliegenden Erfindung liegt die Aufgabe zugrunde, ein Mutternschraubgerät der betrachteten Art anzugeben, bei dem sichergestellt ist, dass die Muttern einwandfrei auf die Nieten aufgeschraubt werden.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass das Mutternschraubgerät in seinem Gehäuse eine Verdrehsicherung aufweist mit einer Kammer, in der ein Verdrehsicherungselement (Bit) verschieblich angeordnet ist, das einen Kopfabschnitt, der den Querschnitt der Kammer im wesentlichen ausfüllt (d.h. dass zwischen dem Kopfabschnitt des Bit und der Innenwand der Kammer nur der zur freien Verschieblichkeit des Bit erforderliche minimale Abstand verbleibt), einen Schaftabschnitt und einen anschließenden Endabschnitt aufweist, der eine mit der Sackbohrung des Niets übereinstimmende Kontur beispielsweise in Form eines Sechsecks hat, und dass die Kammer dem Eindrehwerkzeug, das vorzugsweise durch eine Nuss gebildet ist, benachbart angeordnet ist und eine mittige Austrittsöffnung für den Endabschnitt und den Schaft des Verdrehsicherungselementes aufweist, wobei am Rand der Austrittsöffnung eine umlaufende Schulter als Anschlag für den Kopfabschnitt des Verdrehsicherungselementes ausgebildet ist, um den Bewegungsbereich des Verdrehsicherungselementes zu begrenzen. Das Verdrehsicherungselement ist gegenüber der Kammer nicht-drehbar gehalten, indem bevorzugt der Kopfabschnitt eine nicht-runde Querschnittsform hat, beispielsweise die Form eines Dreiecks mit gerundeten Kanten, wobei die Umfangswand der Kammer entsprechend ausgebildet ist.

Wenn das Verdrehsicherungselement mit seinem Endabschnitt in die Sackbohrung des Niets eingreift und die das Verdrehsicherungselement haltende Kammer in dem Mutternschraubgerät nicht-drehbar gehalten ist, kann das Eindrehwerkzeug die Mutter korrekt auf den Schaft des Niets aufschrauben, da dieser sicher gegen Drehung fixiert ist.

Mit Vorteil wird vorgeschlagen, dass die Kammer an dem von dem Eindrehwerkzeug abgewandten Ende eine Wand aufweist, in die ein Luftkanal einmündet, der mit einer Druckluftquelle verbunden ist. Dabei kann der Luftkanal auch in das obere Ende der Umfangswand der Kammer einmünden, wobei die Anordnung so zu treffen ist, dass die Druckluft zwischen dem Kopfabschnitt des Verdrehsicherungselementes und der rückwärtigen Kammerwand eingeführt wird, um das Verdrehsicherungselement in der Kammer vorzuschieben. Zuvor wurde durch den Luftkanal ein Luftsog ausgeübt, um das Verdrehsicherungselement gegen die rückwärtige Kammerwand zu saugen, und die Mutter wurde in das Eindrehwerkstück gesteckt und wird in dieser Position bevorzugt durch federbeaufschlagte Klinken gehalten. In diesem Zustand wird das Mutternschraubgerät vorzugsweise mittels eines Roboters zu dem in die zugehörige Bohrung eines Bauteils eingesetzten Niet gebracht.

Mit großem Vorteil ist ferner vorgesehen, dass ein zweiter Luftkanal in der Umfangswand der Kammer ausgebildet ist und eine Eintrittsöffnung für in der Kammer befindliche Druckluft hat, deren rückwärtiger Rand einen Abstand von der umlaufenden Schulter hat, der größer ist als die Dicke des Kopfabschnitts des Verdrehsicherungselementes, und gleich oder kleiner ist als die Dicke des Kopfabschnitts zzgl. der Länge des Endabschnitts des Verdrehsicherungselementes, die in die Sackbohrung eintritt, wenn sich das Verdrehsicherungselement und die Sackbohrung in einer übereinstimmenden Umfangslage befinden.

Der zweite Luftkanal hat zweckmäßigerweise eine zu dem Eindrehwerkzeug hin offene Austrittsöffnung.

Vor dem Schraubvorgang strömt Druckluft in den Luftkanal hinter dem Kopfabschnitt des Verdrehsicherungselementes, wodurch dieses in der Kammer vorgeschoben wird, bis der Kopfabschnitt an der umlaufenden Schulter der Kammer anliegt. Dabei passiert der Kopfabschnitt die Eintrittsöffnung zu dem zweiten Luftkanal in der Umfangswand der Kammer und gibt diese Eintrittsöffnung frei, so dass ein Luftstrom durch den zweiten Luftkanal entweichen kann. Die Menge der entweichenden Luft wird durch eine geeignete Messeinrichtung in dem Mutternschraubgerät gemessen und bei Übereinstimmung mit einem vorgegebenen Messwert wird festgestellt, dass das Verdrehsicherungselement vollständig ausgefahren ist.

Anschließend wird das Mutternschraubgerät vorzugsweise durch einen Roboter zum Niet transportiert, woraufhin der Niet in aller Regel das Verdrehsicherungselement zurückdrückt, da der Endabschnitt des Verdrehsicherungselementes nicht in die Sackbohrung eintritt, sondern an die Stirnseite des Niets anstößt. Dadurch, dass das Verdrehsicherungselement in der Kammer zurückgedrückt wird, versperrt der Kopfabschnitt des Verdrehsicherungselementes wieder den zweiten Luftkanal, wodurch der bis dahin entweichende Luftstrom unterbrochen wird und die Messeinrichtung meldet, dass das Verdrehsicherungselement nicht in die Sackbohrung des Niets eingedrungen ist.

Daraufhin wird das Verdrehsicherungselement mit der dieses drehfest haltenden Kammer um die Längsachse gedreht, vorzugsweise recht/links über einen vorbestimmten Winkelbereich, bis das Verdrehsicherungselement mit seinem Endabschnitt in die Sackbohrung eingedringt. Dies wird von der Messeinrichtung festgestellt, wenn sie den vorbestimmten Luftstrom in den zweiten Luftkanal (bzw. aus dem zweiten Luftkanal) erfasst.

Im Anschluss daran wird die Kammer mit dem Verdrehsicherungselement nicht-drehbar gehalten, und das Eindrehwerkzeug wird gedreht, wodurch die Mutter auf den Schaft des Niets aufgeschraubt wird. Das Verdrehsicherungselement wird dabei zurück gedrückt. Bei diesem Vorgang wird das aufgebrachte Drehmoment durch eine Drehmomenterfassungseinrichtung gemessen, wobei bei Erreichen des vorgegebenen maximalen Drehmoments der Schraubvorgang abgeschlossen ist.

In einer vorteilhaften Ausgestaltung der Erfindung wird vorgeschlagen, dass das Verdrehsicherungselement einen konisch sich in Richtung des Kopfabschnitt erweiternden Schaft aufweist, wobei die konische Kontur eine Ausgleichsbewegung in dem Einschraubwerkzeug ermöglicht und ein geringer seitlicher Versatz ausgeglichen werden kann. Auch die bevorzugt vorgesehene konische Gegenkontur des Endabschnitt des Verdrehsicherungselementes ermöglicht den Ausgleich von seitlichem Versatz. Als Maß für den konischen Verlauf dieser beiden Abschnitte werden 3° bis 4° vorgeschlagen.

Wie bereits oben erwähnt, kann das erfindungsgemäße Mutternschraubgerät an dem Arm eines Roboters befestigt sein, der das Mutternschraubgerät präzise zu den in Bohrungen eines Bauteils wie eines Flugzeugrumpfs gesetzten Nieten bewegt, um die Muttern aufzuschrauben. Das Mutternschraubgerät kann aber auch von einer Arbeitsperson von Hand geführt und betätigt werden.

Als Antrieb für das Eindrehwerkzeug kommt zweckmäßigerweise ein Elektromotor zum Einsatz, ohne dass die Erfindung hierauf beschränkt ist. Auch die Drehbewegung der das Verdrehsicherungselement drehfest haltenden Kammer wird zweckmäßigerweise von einem Elektromotor erzeugt.

Weitere Einzelheiten der Erfindung ergeben sich aus der nachfolgenden Beschreibung einer bevorzugten Ausführungsform des Mutternschraubgerätes sowie anhand der Zeichnungen. Dabei zeigen:
- Figur 1: eine perspektivische Ansicht einer Ausführungsform des Mutternschraubgerätes;
- Figur 2: einen Längsschnitt durch das Gerät;
- Figur 3: eine Unteransicht des Gerätes;
- Figuren 4a, 4b: ein Verdrehsicherungselement in einer Aufsicht auf den Kopfabschnitt und Seitenansichten mit Angabe der Winkel der konischen Erweiterungen;
- Figur 5: eine perspektivische Ansicht des Verdrehsicherungselementes und
- Figuren 6 bis 11: den Bereich des Eindrehwerkzeugs des Mutternschraubgerätes in verschiedenen Zuständen des Schraubvorgangs.

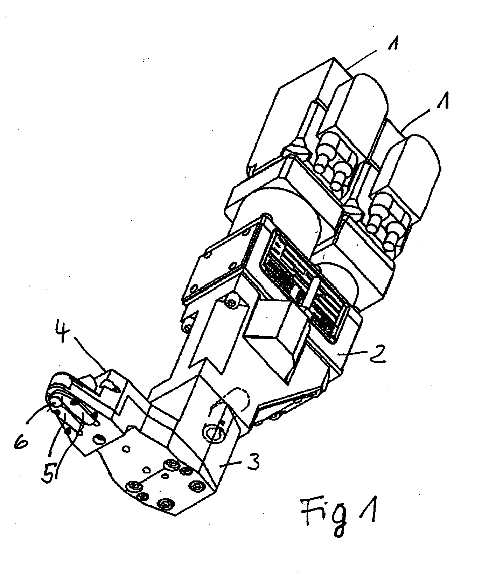

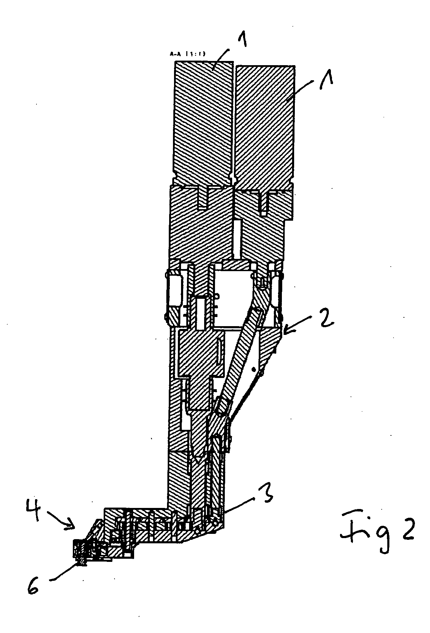

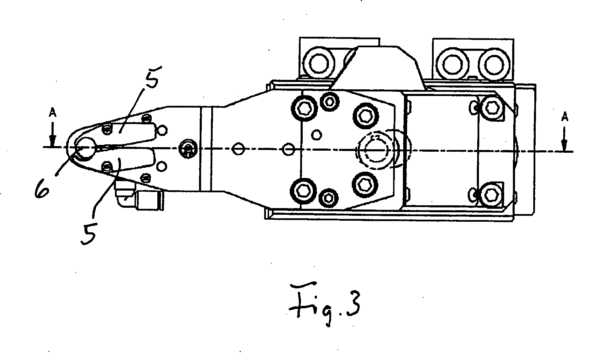

Das in den Figuren 1 bis 3 dargestellte Mutternschraubgerät enthält zwei Antriebe 1, ein Gehäuse 2, ein Getriebe 3 und eine Mimik 4.

An der Unterseite des Gerätes befinden sich an der Mimik 4 zwei federbeaufschlagte Klinken 5, die eine jeweils eingesetzte Mutter 6 halten.

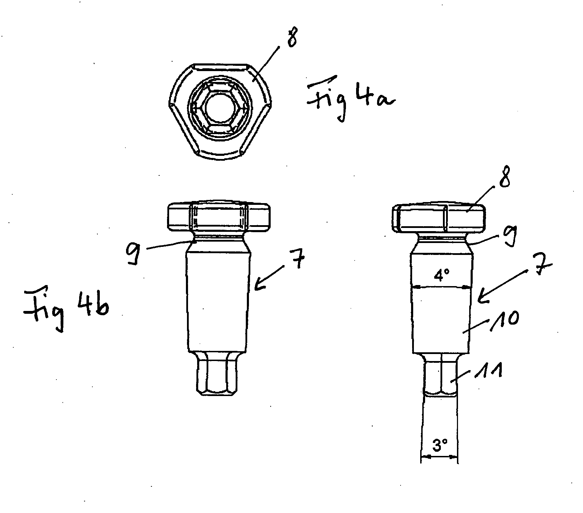

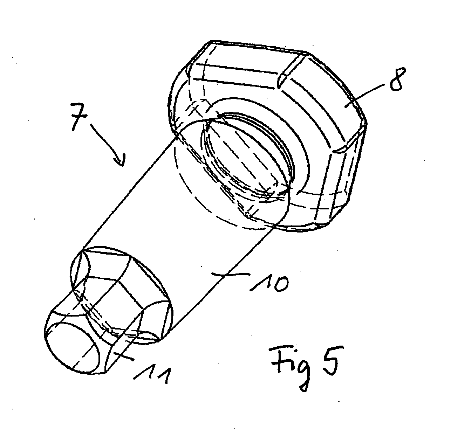

Die Figuren 4a, 4b und 5 zeigen ein Verdrehsicherungselement 7, das dazu dient, einen Niet beim Aufschrauben der zugehörigen Mutter drehfest zu halten. Das Verdrehsicherungselement 7 enthält einen Kopfabschnitt 8, der einen nichtrunden Umfang hat, beispielsweise in der gezeigten Form eines angenäherten Dreiecks mit gerundeten Kanten.

Nach einer Einschnürung 9 schließt sich ein Schaftabschnitt 10 an, der annähernd eine Zylinderform hat, sich jedoch leicht (in einem Winkel von 4°) zu einem anschließenden Endabschnitt 11 hin verjüngt.

Der Endabschnitt 11 hat querschnittlich eine Sechseckform und erweitert sich zu seinem freien Ende hin leicht konisch in einem Winkel von 3°.

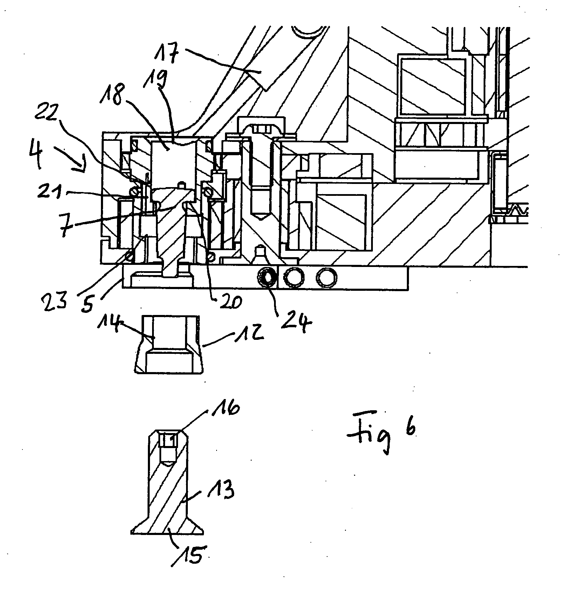

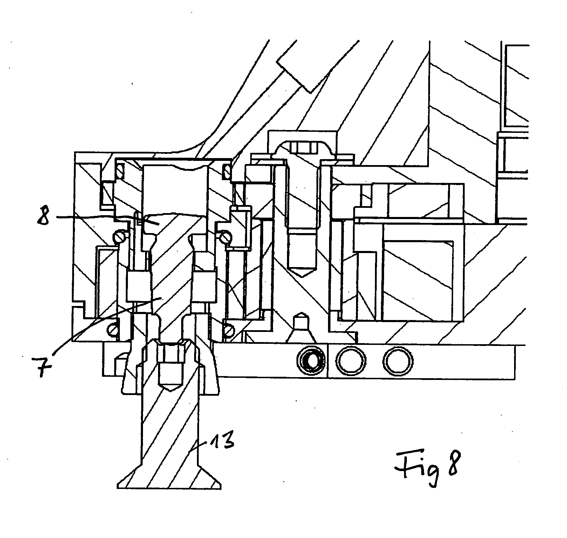

Die Figuren 6 bis 11 zeigen den Bereich der Mimik 4 des Mutternschraubgerätes in verschiedenen Stadien des Aufschraubens einer Mutter 12 auf den Schaft eines Niets 13. Die Mutter 12 hat an dem oberen Abschnitt 14 ihrer Innenseite ein Gewinde, das auf ein Außengewinde des Niets 13 aufzuschrauben ist.

An seinem dem Nietkopf 15 gegenüberliegenden Ende hat der Niet 13 eine Sackbohrung 16, deren Innenkontur mit der Außenkontur des Endabschnitts 13 des Verdrehsicherungselementes 7 im wesentlichen überein stimmt, d.h. der Endabschnitt 11 tritt mit sehr geringem seitlichen Spiel in die querschnittlich sechseckige Sackbohrung 16 ein, wenn die beiden Eingriffelemente in Umfangsrichtung entsprechend positioniert sind.

Durch das Mutternschraubgerät führt ein Luftkanal 17 in eine Kammer 18, in der sich das Verdrehsicherungselement 7 befindet. Die Kammerwände haben eine solche Konfiguration, dass der Kopfabschnitt 8 des Verdrehsicherungselementes 7 in dem gesamten Bewegungsbereich des Kopfabschnitts 8 dicht an diesem anliegen. Da der Kopfabschnitt 8 eine nicht-runde Umfangsform hat, ist er somit in der Kammer 8 drehfest gehalten.

Die Kammer 18 hat an dem der oberen Rückwand 19 gegebenüberliegenden Ende eine mittige Öffnung, deren Durchmesser etwas größer ist als der Durchmesser des Schaftabschnitts 10 des Verdrehsicherungselementes 7. An dem Rand der mittigen Öffnung enthält die Kammer 18 eine umlaufende Schulter 20, die den Bewegungsbereich des Kopfabschnitts 8 des Verdrehssicherungselements 7 begrenzt.

Ein zweiter Luftkanal 21 ist in der Seitenwand der Kammer 18 ausgebildet und hat eine Eintrittsöffnung 22 für die in der Kammer befindliche Druckluft, die oberhalb des Kopfabschnitts 8 des Verdrehsicherungselementes 7 liegt, wenn der Kopfabschnitt 8 an der umlaufenden Schulter 20 der Kammer 18 anliegt. Der zweite Luftkanal 21 ist zur Unterseite der Kammer 18 hin offen.

Unterhalb der Kammer 18 befindet sich ein Eindrehwerkzeug 23 in Form einer Nuss, in die eine Mutter 12 vor einem Schraubvorgang eingesteckt wird. Die Mutter 12 wird von den oben erwähnten Greiferbacken 5 gehalten. Mit dem Bezugszeichen 24 ist eine Druckfeder für die Greiferbacken 5 bezeichnet.

In dem in Figur 6 gezeigten Zustand strömt Druckluft durch den Luftkanal 17 zwischen die rückwärtige Wand 19 der Kammer 18 und den Kopfabschnitt 8 des Verdrehsicherungselementes 7, wodurch das Verdrehsicherungselement 7 ausgefahren ist und an der Ringschulter 20 anliegt. Die Luft entweicht in dieser Lage des Verdrehsicherungselementes 7 durch den zweiten Luftkanal 21. Durch eine Messeinrichtung wird die entweichende Luftmenge gemessen, und eine Auswerteeinrichtung stellt fest, dass das Verdrehsicherungselement bis in die Endlage ausgefahren ist.

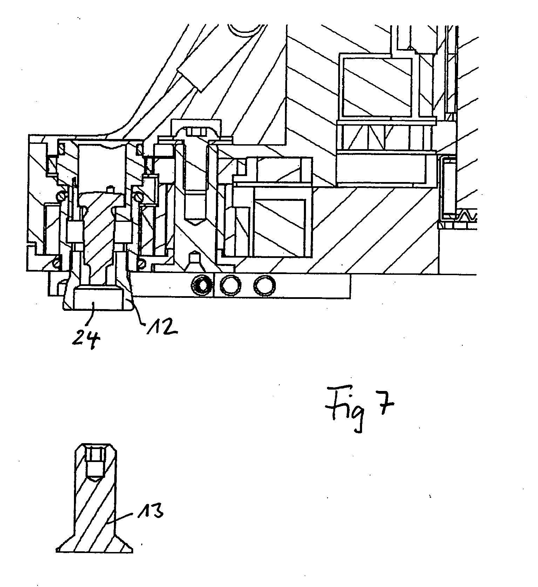

Gemäß Figur 7 wird eine Mutter 12 in die Nuss des Eindrehwerkzeugs 23 eingesetzt und durch die Klinken 5 gehalten.

Anschließend wird das Mutternschraubgerät - bevorzugt mittels eines Roboters ― zu dem Niet 13 gebracht, der dabei in die erweiterte Eintrittsöffnung 24 der Mutter (relativ betrachtet) eintritt und mit Randbereichen seiner Sackbohrung 16 auf den Endabschnitt 11 des Verdrehsicherungselementes 7 auftrifft und dieses dabei gegen den Luftstrom zurück drückt. Dabei passiert der Kopfabschnitt 8 die Eintrittsöffnung 22 des zweiten Luftkanals 22, wodurch der Luftstrom abbricht. Die fortlaufende Messung des Luftstroms ergibt somit, dass das Verdrehsicherungselement 7 mit seinem Endabschnitt 11 nicht in die Sackbohrung 16 eingedrungen ist.

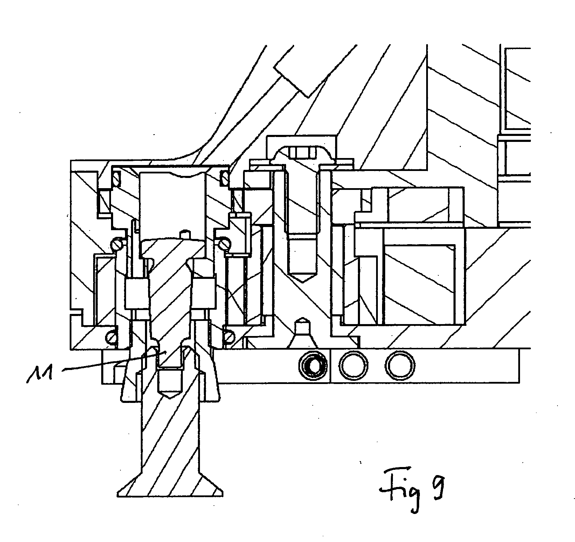

Anschließend wird das Verdrehsicherungselement 7 mit dem Gehäuse bzw. der Kammer 18 in einem vorgegebenen Winkel recht/links gedreht, bis der Endabschnitt 11 des Verdrehsicherungselementes 7 in die Sackbohrung 16 - vorgeschoben durch den Luftkanal 17 - eindringt. In diesem Zustand strömt wieder Luft durch den Luftkanal 21, was von der Messeinrichtung erfasst wird. Dieser Zustand ist in Figur 9 dargestellt.

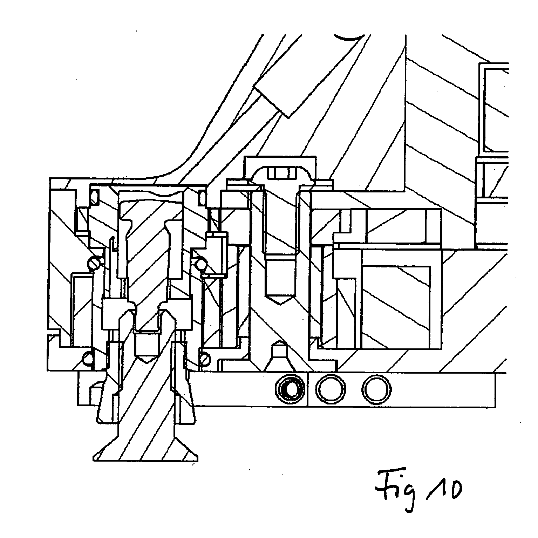

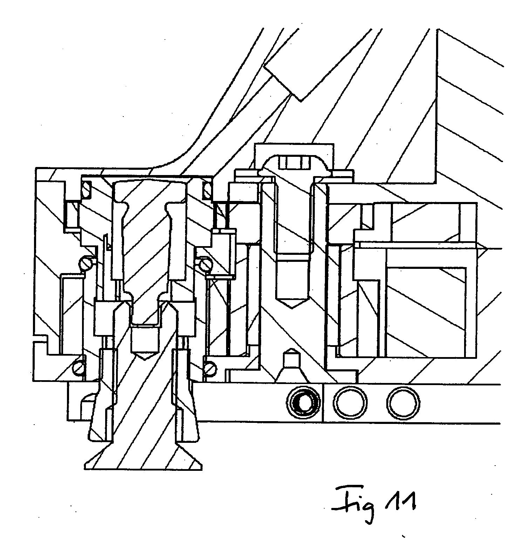

Auf ein entsprechendes Signal hin führt nun das Eindrehwerkzeug 23 den Schraubvorgang aus, bei dem das Verdrehsicherungselement 7 in der Kammer 18 zurück gedrückt wird (Figuren 10 und 11).

Nach Beendigung des Schraubvorgangs wird durch den Luftkanal 17 ein Unterdruck auf den oberen Bereich der Kammer 18 ausgeübt, wodurch der Kopfabschnitt 8 an die Rückwand 19 angesaugt wird.

Es wird betont, dass die Erfindung nicht auf die beschriebene und dargestellte Ausführungsform beschränkt ist. Alle in der Beschreibung und in der Zeichnung offenbarten Merkmale können einzeln - auf jede sinnvolle Weise - miteinander kombiniert werden. Es wird außerdem hervorgehoben, dass die in den Zeichnungen dargestellten Merkmale, die nicht detailliert beschrieben, jedoch gegenüber dem Stand der Technik neu sind, als zur Erfindung gehörig beansprucht werden.

Es wird betont, dass die Erfindung nicht auf die beschriebenen und dargestellten Ausführungsformen beschränkt ist. Vielmehr sind alle offenbarten Merkmale auf jede sinnvolle Weise einzeln miteinander kombinierbar.

## Patentansprüche

1. Mutternschraubgerät zum Aufschrauben einer Mutter auf einen Niet, der an dem dem Nietkopf gegenüberliegenden Ende eine Sackbohrung aufweist, die eine querschnittlich nicht-runde Kontur hat, mit wenigstens einem Antrieb, der über ein Getriebe antriebsmäßig mit einem Eindrehwerkzeug verbunden ist, das eine Aufnahmeöffnung zum Einstecken der Mutter hat,
**dadurch gekennzeichnet,**
**dass** das Mutternschraubgerät eine Verdrehsicherung aufweist mit einer Kammer (18), in der ein Verdrehsicherungselement (Bit) (7) verschiebliche angeordnet ist, das einen Kopfabschnitt (8), der den Querschnitt der Kammer (18) im wesentlichen ausfüllt, einen Schaftabschnitt (10) und einen anschließenden Endabschnitt (11) mit einer mit der Sackbohrung (16) übereinstimmenden Kontur aufweist, wobei die Kammer (18) dem Eindrehwerkzeug (23) benachbart angeordnet ist und eine mittige Austrittsöffnung für den Schaft (10) mit dem Endabschnitt (11) des Verdrehsicherungselementes (7) und am Rand der Austrittsöffnung eine umlaufende Schulter (22) als Anschlag für den Kopfabschnitt (8) des Verdrehsicherungselementes (Bit) aufweist.

2. Mutternschraubgerät nach Anspruch 1,
**dadurch gekennzeichnet,**
**dass** die Kammer (18) an dem von dem Eindrehwerkzeug (23) abgewandten Ende eine Rückwand (19) aufweist, in die ein Luftkanal (17) einmündet, der mit einer Druckluftquelle oder einer Vakuumquelle verbunden ist.

3. Mutternschraubgerät nach einem der Ansprüche 1 oder 2,
**dadurch gekennzeichnet,**
**dass** ein zweiter Luftkanal (21) in der Umfangswand der Kammer (18) ausgebildet ist und eine Eintrittsöffnung (22) für in der Kammer (18) befindliche Druckluft hat, deren Rand einen Abstand von der umlaufenden Schulter (20), der größer ist als die Dicke des Kopfabschnitts (8) des Verdrehsicherungselementes (7), und gleich oder kleiner ist als die Dicke des Kopfabschnitts (8) zzgl. der Länge des in die Sackbohrung (16) eintretenden Teils des Endabschnitts (11) des Verdrehsicherungselementes (7).

4. Mutternschraubgerät nach Anspruch 3,
**dadurch gekennzeichnet,**
**dass** der zweite Luftkanal (21) eine zum Eindrehwerkzeug (23) hin offene Austrittsöffnung hat.

5. Mutternschraubgerät nach einem der Ansprüche 1 bis 4,
**dadurch gekennzeichnet,**
**dass** die Kammer (18) mit dem Verdrehsicherungselement (7) um ihre Längsachse drehbar angeordnet ist.

6. Mutternschraubgerät nach einem der Ansprüche 1 bis 5,
**dadurch gekennzeichnet,**
**dass** der Schaft (10) des Verdrehsicherungselementes (7) sich zu dem Endabschnitt (11) hin konisch verjüngt.

7. Mutternschraubgerät nach einem der Ansprüche 1 bis 6,
**dadurch gekennzeichnet,**
**dass** sich der Endabschnitt (11) des Verdrehsicherungselementes (7) zu dem Schaftabschnitt (10) hin konisch verjüngt.

8. Mutternschraubgerät nach einem der Ansprüche 1 bis 7,
**dadurch gekennzeichnet,**
**dass** dem Eindrehwerkzeug (23) benachbarte federbeaufschlagte Greiferbacken (5) zum Halten der Mutter (12) angeordnet sind.

9. Mutternschraubgerät nach einem der Ansprüche 1 bis 8,
**dadurch gekennzeichnet,**
**dass** das Mutternschraubgerät an dem Arm eines Roboters befestigt ist.
